Europäisches Patentamt

European Patent Office

Office européen des brevets

(19)

(11) Publication number : **0 636 974 A2**

## (12) EUROPEAN PATENT APPLICATION

(21) Application number : **94305497.3**

(22) Date of filing : **26.07.94**

(51) Int. Cl.[6] : **G06F 9/46,** G06F 3/033

(30) Priority : **29.07.93 US 98998**

(43) Date of publication of application :
**01.02.95 Bulletin 95/05**

(84) Designated Contracting States :
**DE FR GB**

(71) Applicant : **AT & T GLOBAL INFORMATION
SOLUTIONS INTERNATIONAL INC.
1700 South Patterson Boulevard
Dayton, Ohio 45479 (US)**

(72) Inventor : **1Miller, Michael Stephen
310 Waverly Hall Circle
Roswell, Georgia 30075 (US)**
Inventor : **Hunter, Wesley Gene
3425-B North Druid Hills Road
Decatur, Georgia 30033 (US)**

(74) Representative : **Robinson, Robert George
International Patent Department,
AT&T GIS Limited,
915 High Road,
North Finchley
London N12 8QJ (GB)**

(54) **System and method for control of a computer.**

(57) A system and method for controlling a computer which includes a single control program having the functionality of an operating system and a plurality of separate application programs. The control program includes a graphic user interface which comprises interface data objects instead of separate application programs. A first embodiment of a computer system under the present invention includes a keyboard which is specially tailored to work with the graphic user interface and includes a graphic input device and special function keys in addition to standard alphanumeric keys. A second embodiment of a computer system under the present invention comprises a pen computer having a digitizer and a stylus for entering user input into the program.

**FIG. 1**

EP 0 636 974 A2

The present invention relates to computer interfaces, and more specifically to a system for and a method of controlling a computer.

Newer, modern interfaces are based upon a "desktop" metaphor. All work as well as system resources are displayed as icons or lists of named items on a simulated desktop. Users interact with the desktop when they first turn on the system, in between working with different application programs, to perform "housekeeping" operations, and to transfer information from task to task.

The human interface community is quite aware of the benefits of the desktop metaphor, which is a well-disguised and improved version of the traditional operating system concept, namely a "central dispatch area" from which "system commands" are issued. The basic improvement consisted of making previously obscure commands, which had to be memorized, visible according to a straightforward mental model.

There are many problems with the desktop approach. Time and effort are spent learning and operating the desktop, instead of doing productive work. The desktop is an application program just like any other, but applications restrict access to different operations at different times, which is inherently modal. From the user's perspective, removing modes from an interface is beneficial because it relieves users of having to remember the state of the system each time they do something.

Macintosh, Windows, Motif, and other similar computer environments are platforms for application programs. Users of such computer environments are often confronted by new applications, and they know that new software for their computers means significant new work for themselves. They have come to expect that each new application demands that they enter, explore, and master a unique world. Some people delight in this kind of adventuring. Many others, though, when faced with a stack of manuals for a new drawing program or spreadsheet, often prefer to continue doing their work in the "old way" (because doing their work matters more to them than working their computers). These folks have learned the hard way that using a computer involves an inordinate amount of personal time making a system work that is cumbersome and slow and an inordinate amount of knowledge to do something that is not a whole lot better than a manual typewriter.

It is an object of the present invention to provide a system for and a method of controlling a computer which alleviates the aforementioned problems, caused by the use of the desk top interface format.

In accordance with a first aspect of the present invention there is provided a computer system characterized by a processor which executes a single program which includes the functionality of an operating system and a plurality of separate application programs and which includes a graphic user interface; a display device coupled to the processor which displays the graphic user interface; and a user input means coupled to the processor for entering user input into the program.

In accordance with a second aspect of the present invention there is provided a method of controlling a computer system characterized by the steps of: executing a single program in a processor which has the functionality of an operating system and a plurality of separate application programs and which includes a graphic user interface; displaying the graphic user interface on a display coupled to the processor; and entering user input into the processor, including the substeps of contacting a stylus against the surface of a digitizer coupled to the processor.

The provision of a system for and a method of controlling a computer which does not suffer from the above problems and which allows users to concentrate on their tasks and remain much less aware of the underlying computer is an advantage of the present invention.

A first embodiment of a computer system in accordance with the present invention includes a processor which executes the single program. A display device couples to the processor and displays the graphic user interface. A keyboard is coupled to the processor for entering user input into the program.

The keyboard is specially tailored to work with the graphic user interface and includes a graphic input device and special function keys in addition to standard alphanumeric keys. These special function keys include a spider key which causes a graphics cursor to be displayed, a column key which generates rectangular text columns, a page key which generates new pages, a document key which generates document dividers between predetermined pages, a folder key for generating folders for organizing documents, leap keys which reposition the text cursor by searching for a pattern, a menu key which activates menus, a scroll key for scrolling the system content, a zoom key for zooming the system content, a select key for creating a current selection, a more key for adding objects to the current selection, a less key for removing objects from the current selection, a view key which manages split views, a touch key for selecting graphic menu functions, an apply key for applying graphic menu functions, and a help key.

A second embodiment of a computer system in accordance with the present invention comprises a pen computer. Like the first embodiment, the second embodiment includes a processor which executes the control program. A display device is coupled to the processor and displays the graphic user interface. A user input device including a digitizer and a stylus is coupled to the processor for entering user input into the program.

It is a feature of the second embodiment that the stylus includes a barrel switch in addition to a standard tip switch. The barrel switch works with the graphic user interface to implement predetermined functions.

The display comprises a plurality of distinct areas established by the graphic user interface for displaying information associated with each area. A first area displays hints for what to do next. A second area has indicators which indicate conditions and controls which operate tools. Finally, a third area contains system content.

The graphic user interface includes a plurality of tools including a menu tool which executes commands and other tools, a select tool which designates objects for subsequent commands, a drawing tool which instantiates freeform objects, a navigation tool which changes a current view of the system content, a warp tool which finds and traverses connections among objects, a touch tool which presses and drags objects, a search tool which finds commands and tools and strings of text, a revisit tool which revisits sites of recent activity, an undo tool which recovers from mistakes, and an explain tool which demystifies the graphic user interface. The graphic user interface may additionally contain a telephone tool which dials a name or telephone number.

The graphic user interface includes a plurality of states, including a first state in which the stylus is not in use, a second state in which tip switch is open and the tools are ready for use, a third state in which the tip switch is closed but none of the tools is in use, a fourth state in which the tip switch is open and the tools are ready for use, and a fifth state in which the tip switch is closed and one of the tools is in use.

Embodiments of the present invention are described, by way of example, with reference to the accompanying drawings, in which:

Fig. 1 is a block diagram of a computer system;

Fig. 2 is a diagram of the content and organization of the memory of Fig. 1;

Fig. 3 is a block diagram of the interface of the present invention;

Fig. 4 is a diagram of a keyboard for use with a first embodiment of the interface of the present invention;

Fig. 5 is a flow diagram illustrating the initialization and startup of the computer system of Fig. 1;

Figs. 6A and 6B form a flow diagram illustrating the operation of the input manager of Fig. 3;

Fig. 7 is a flow diagram illustrating how graphic inputs are handled by the input manager;

Fig. 8 is a flow diagram illustrating how scroll inputs are handled by the input manager;

Fig. 9 is a flow diagram illustrating how keyboard commands to insert characters are handled by the input manager;

Fig. 10 is a flow diagram illustrating how keyboard commands to insert structure are handled by the input manager;

Fig. 11 is a view of a digitizer screen of a pen computer illustrating the pen computer version of the present invention;

Fig. 12 is a view of a digitizer screen illustrating the use of menus;

Fig. 13 is a view of a digitizer screen illustrating how to navigate;

Fig. 14 is a view of a digitizer screen illustrating an embedded object; and

Fig. 15 is a view of a digitizer screen illustrating another embedded object.

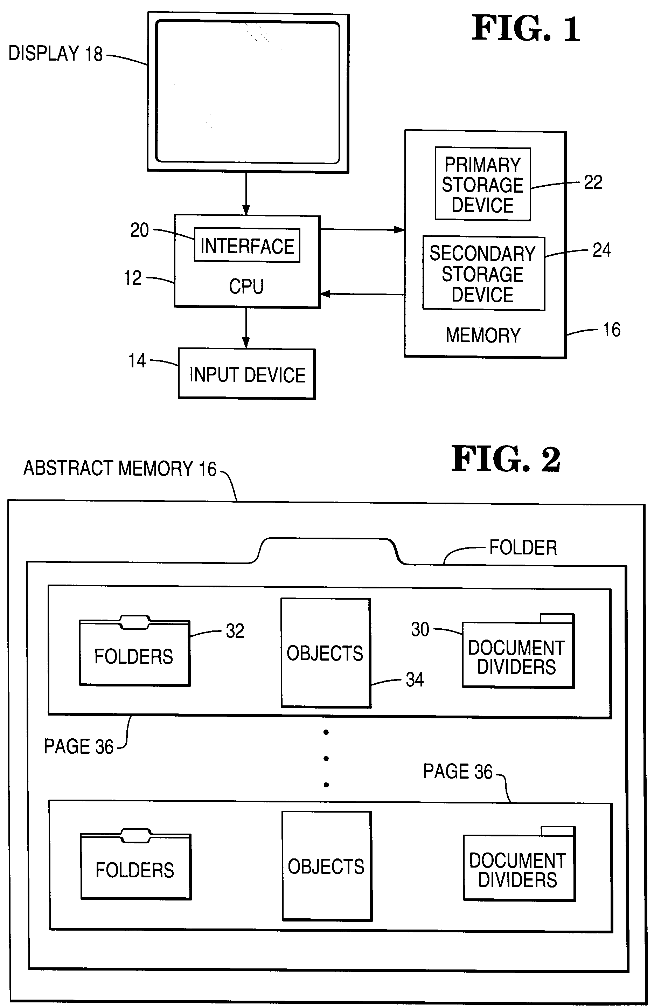

Referring now to Fig. 1, a computer system 10 employing the user interface 20 of the present invention includes central processing unit (CPU) 12, input device 14, memory 16, and display 18.

CPU 12 executes interface 20 and provides basic data types and functionality for user tasks. Interface 20 eliminates the need for application programs. CPU 12 is capable of running software functions, such as word processing, graphics, spreadsheets, personal data bases, and telephone/facsimile management. Almost any operating system may be employed. Since user interface 20 contains its own display model, memory organization, and process management, only device drivers are required.

Input device 14 may include a keyboard under a first embodiment of the present invention, or a pen input surface and pen under a second embodiment of the present invention.

Memory 16 includes both primary and secondary storage device 22 and 24. Primary storage device 22 is preferably random-access memory (RAM). Secondary storage 24 may include magnetic or magneto-optical media in hard drives and floppy drives. Interface 20 treats primary memory as a cache for secondary storage, which holds all system content.

Conceptually unifying the primary memory and secondary storage hierarchy into a single entity means that users need be far less concerned about details of hard disk partitions, floppy disks, memory cards, and network file systems.

Since user interface 20 is simpler internally as well as externally, system 10 may incorporate modest hardware. However, interface 20 of the present invention requires that demountable secondary memory devices (such as floppy disk drives and memory card modules) signal CPU 12 when their media are inserted and when their eject buttons are pressed (in the latter case, CPU 12 must release the media).

Display 18 may be any typical display device. Display performance is critical. Bitmapped technology is preferred, and rapid display memory access is necessary to achieve the performance characteristics dictated by human factors. Display resolution and aspect ratio are relatively unimportant. Since the present invention does not clutter the display with conventional interface machinery, smaller displays are practicable.

Both interface 20 and its implementation are predicated on an object-oriented paradigm. Interface data objects are manipulated within an object soup without the need for conventional application programs. The following items are examples of typical objects in interface 20 of the present invention:

■ Alphanumeric text, tabs, carriage returns, columns, pages, documents, and hierarchical folders.
■ Points, freehand curves, straight lines, polygons, ellipses, and pixellated images.
■ Paragraph rulers (for margins, indents, and tab stops) and color dialogs (for color models and components).
■ Commands, menus, help and error messages, and manuals.
■ Electronic mail addressee lists, configuration parameters, spelling exceptions, proxies for server computers, and background commands.

All objects are visible and manipulable in essentially the same fashion. They can be created, moved, copied, printed, combined, and deleted with a trivial amount of effort. In addition, each class of object has additional attributes and behavior that make it a useful abstraction. All objects in interface 20 follow uniform conventions for providing access to their attributes and behavior through commands and other interactive components of interface 20.

Referring now to Fig. 2, interface 20 employs a different method of organizing and storing data and programs in memory 16 than the typical file system based upon directory trees. Document dividers 30, hierarchical folders 32, and graphic objects 34 are stored on pages 36 organized in a linear sequence.

When displayed on display 18, the sizes of pages 36 may vary (letter, legal, and special sizes) as may the orientations (portrait and landscape). Pages 36 are arranged such that their left edges are vertically aligned and their top and bottom edges are butted together. Display 18 shows some portion of this linear page sequence and hence part or all of one or more pages 36. Unlike conventional files, which are special entities with associated special rules, documents are simply sequences of pages 36 separated by document dividers 30.

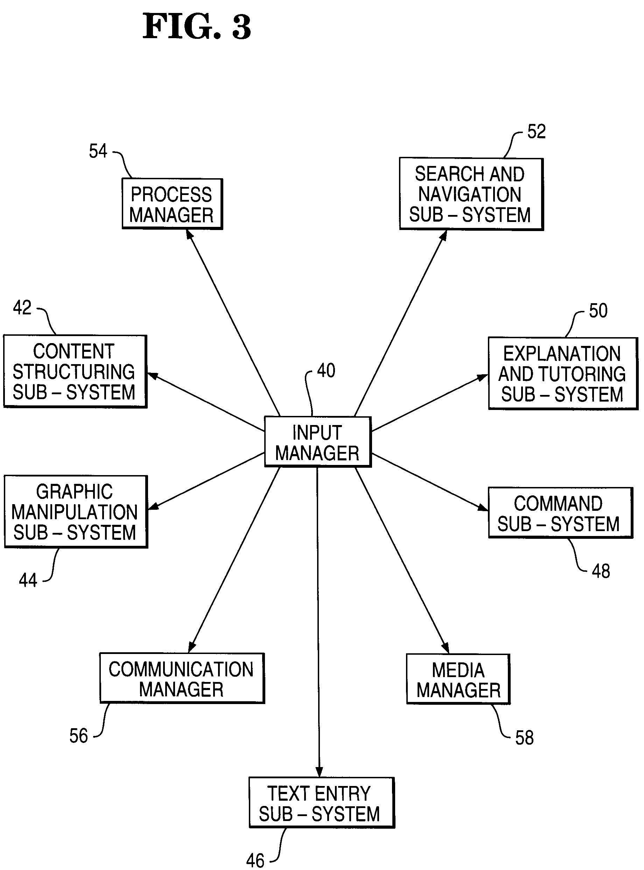

Referring now to Fig. 3, the heart of interface 20 is input manager 40. Input manager 40 controls operation of all interface subsystems, which include content structuring sub-system 42, graphic manipulation subsystem 44, text entry subsystem 46, command subsystem 48, explanation and tutoring subsystem 50, and search and navigation subsystem 52, as well as process manager 54, communication manager 56, and media manager 58. Input manager 40 provides the pathways that connect physical hardware input-output devices (keyboard, trackball, pen, display, and network) with the user and the user's tasks.

Content structuring subsystem 42 is used to organize data in ways that make sense to a user.

Graphic manipulation subsystem 44 provides graphic functions, such as zoom/scroll, tracking cursor, picking up and applying tools, changing number and position of tiled views, and selecting objects. It involves using a graphic input device (to control cursor) with keys to graphically manipulate objects being displayed.

Text entry subsystem 46 allows a user to enter ASCII text and edit the text.

Command subsystem 48 allows a user to perform functions on selected objects.

Explanation and tutoring subsystem 50 shows a user how to use interface 20. It explains all features and objects upon user demand. It also explains any error that occurs along with the actions necessary to correct the error.

Search and navigation subsystem 52 allows a user to easily move around in the data content.

Process manager 54 provides the best possible response (i.e., timely response) to a user's requests and interactions.

Communication manager 56 handles internal and external communication from system 10 to the user (i.e. notification that a background process has finished) and from the user to another user (i.e. electronic mail). This sub-system also resolves network addressing and transfers data between machines.

Media manager 58 handles the interfaces with external computing resources (i.e., network file servers, telephone services, removable media). It detects when the external media has changed and updates the displays.

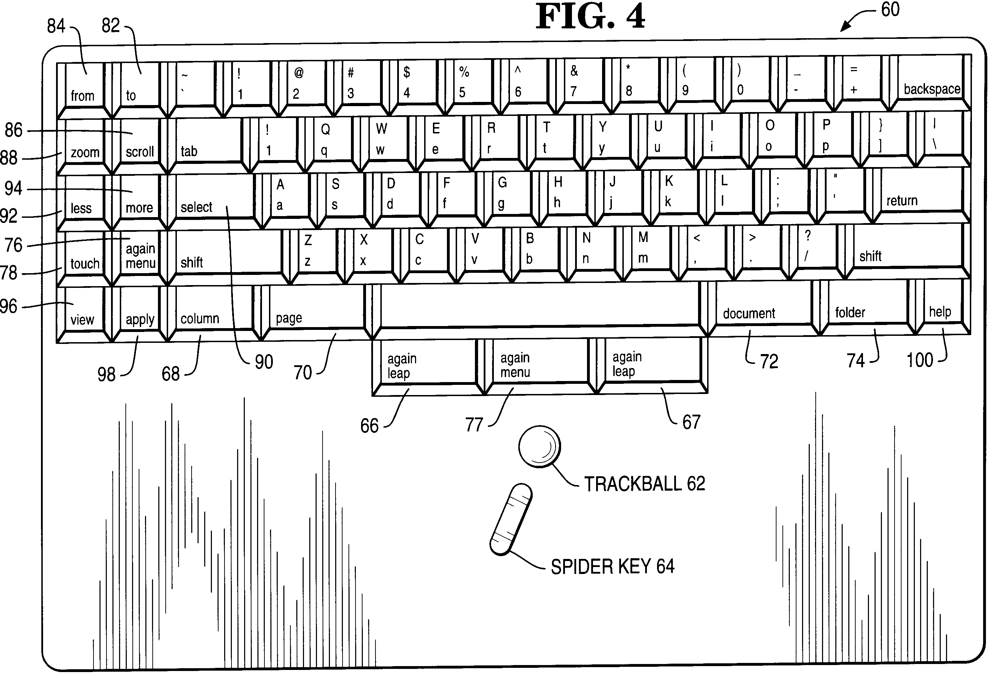

Referring now to Fig. 4, keyboard 60 for use with a first embodiment of the present invention is shown. Keyboard 60 includes special keys in addition to standard alphanumeric keys. Keyboard 60 also contains a graphic input device (GID) 62. Preferably, an integral trackball is employed, although a small touchpad is another possibility. Other embodiments could be driven by a stylus or a finger.

GID 62 generates or adjusts two-dimensional coordinates of points on the display screen. Operating GID 62 without depressing other keys converts the cursor to its graphic manifestation and moves it about the screen. Graphic pseudomode keys, if depressed while operating GID 62, interpret graphic input in specialized fashions. Examples include keys for hypertextual navigation, scrolling and zooming, selection, split view management, menus, and graphic tools.

In current systems, the text cursor marks a current text position while the graphic pointer is busy elsewhere. At least two problems result from this approach. First, the user must learn and manage two foci of attention. Second, one of these (the text cursor) may sometimes be either nonexistent (while the user is within some nontext mode) or invisible (located within offscreen text). It is easy to forget that typing will echo at the text cursor position even though it is out of sight and mind while attention is focused on the graphic pointer.

System 10 integrates GID 62 with the text cursor. The resulting marker is always onscreen and manifests itself either graphically or textually depending upon the situation. Menus and scrolling, for example, are both activated by pseudomodes that generally preserve the previous cursor position. Thus the user deals with a single, visible focus of attention.

The spider key 64 is located near GID 62 and is depressed to obtain graphic input that is constrained to one of the four primary compass axes. When spider key 64 is first depressed, subsequent graphic input is evaluated, the closest axis is chosen, and further input is constrained accordingly by that original choice until spider key 64 is released. Tapping spider key 64 without operating GID 62 also manifests the graphic cursor.

Keys on the diagram are colored either white or gray, although other color combinations are also possible. The gray keys perform pseudomodal and editing functions. The white keys generate ASCII characters and content structure; they can also be used with leap keys 66 and 67 to reposition the text cursor according to a leap pattern. Functions labeled on the upper portions of keys are obtained with either shift key.

Note the omission of control and caps lock keys. The control key is typically used on current systems in mysterious ways best forgotten. In particular, generating control codes for server computers should not be a task for human users! The caps lock key is a mode, so we propose to replace its functions with commands that perform upper case, lower case, and title case transformations upon selected strings.

Note also the omission of a numeric pad, which may be required in certain markets.

The content structuring keys are column key 68, page key 70, document key 72, and folder key 74. They are located on both sides of the space key. Column and page keys 68 and 70 can generate explicit breaks within a text sequence. Page key 70 can generate new pages, and column key 68 can be used as a graphic pseudomode to create rectangular text columns. Document and folder keys 72 and 74 generate new document dividers and folder glyphs, respectively. Note that all content structuring keys can be used with leap keys 66 and 67.

Leap keys 66 and 67 are pseudomodes for repositioning the text cursor by searching for a pattern. They are located below the space key. One or the other is depressed with a thumb while a leap pattern is typed. The left key searches "left" and "above" the cursor position. The right key searches "right" and "below" the cursor position. Typing each character of the pattern repositions the cursor (converting it to text manifestation if necessary) just left of the instance of the pattern (as it has been typed so far) that is closest to the original cursor position.

Operation of the leap keys is disclosed in U.S. Patent No. 4,806,916 issued February 21, 1989, to Raskin et al. and U.S. Patent No. 5,019,806 issued May 28, 1991, to Raskin et al. These patents are hereby incorporated by reference.

Leaping while menu key 76 or 77 is depressed (menu leaping) is similar except that menus containing matching command names and menu labels are displayed, matching command names are highlighted, and the graphic cursor is used. To qualify the direction of certain commands, creep while depressing menu key 76 or 77.

To remove the most recently typed character from the leap pattern, tap the backspace key while continuing to depress either leap key 66 or leap key 67. To repeat the previous leap in either direction, tap the appropriate leap key 66 or 67 while either shift key is depressed.

To creep the cursor by a single character position in either direction, tap the appropriate leap key 66 or 67 while no other key is depressed. This is the most common way to convert the cursor from graphic to text manifestation.

Menu keys 76 and 77 are located between the leap keys 66 and 67 and left of the main ASCII keyboard.

To see the topmost level of the menu hierarchy, depress a menu key 76 or 77. To invoke a command from the menu, tap the corresponding command key or move the cursor over the command name and tap the touch key 78. Then release the menu key 76 or 77. To access a category menu, continue depressing the menu key 76 or 77 and tap the corresponding category key or move the cursor over the category name and tap the touch key 78.

To restore the parent of the current menu, continue depressing the menu key 76 or 77 and tap the backspace key. To repeat the most recent command, depress either shift key while tapping the menu key 76. To redisplay the menu for the most recent command without repeating it, depress either shift key, depress but do not release the menu key 76 or 77, and then release the shift key. To find a command or category, leap while depressing the menu key 76 or 77. To qualify the direction of certain commands, creep while depressing the menu key 76 or 77 or move the cursor over a leap indicator and tap the touch key 78.

The backspace key is located at the upper right corner of the keyboard. Tapping it removes the object left of the text cursor, removes the most recently typed character from a leap pattern, removes the command highlight from the menu, and restores the parent of the current menu. Tapping it also removes the page or document divider under the graphic cursor.

The hypertextual navigation (warping) keys are the from and to keys 82 and 84. They are located left of the main ASCII keyboard. They highlight hypertext nodes, preview the nodes at the other ends of hypertext links, and commit the view after previewing.

To highlight visible originating nodes, depress the from key 84. To preview the nodes to which such a node is linked, place the cursor over the originating node and (while continuing to depress the from key) depress the to key 82. The cursor may now be moved to transfer the terminating view to another view. Release the to key 82 and repeat to preview other terminating nodes. To commit the view to a terminating node while both keys are depressed, release the from key 84.

To highlight visible terminating nodes, depress the to key 82. To preview the nodes from which such a node is linked, place the cursor over the terminating node and (while continuing to depress the to key 82) depress the from key 84. The cursor may now be moved to transfer the originating view to another view. Release the from key 84 and repeat to preview other originating nodes. To commit the view to an originating node while both keys are depressed, release the to key 82.

The scroll and zoom keys 86 and 88 are located left of the main ASCII keyboard. Used with GID 62, they change the portion and magnification of the system content that is displayed in the current view.

To scroll a view, depress the scroll key 86 while operating the GID 62 as if to push the portion of the system content that lies within the view in the direction of GID motion. To change the magnification associated with the current view, depress the zoom key 88 while operating the GID 62 as if to move the cursor toward (increasing magnification, or zooming "in") or away from (decreasing magnification, or zooming "out") the center of the view. Chording is acceptable (the two keys are side by side), and the more recently depressed key interprets the graphic input.

The selection keys are select key 90, less key 92, and more key 94. They are located left of the main ASCII keyboard. The select key 90 creates the current selection, the more key 94 adds objects to the current selection, and the less key 92 removes objects from the current selection.

All three keys can be used with the leap keys 66 (by tapping while a leap key 66 or 67 is depressed to select all objects over which the cursor is leaping), with the GID 62 (by depressing while the GID 62 sweeps the cursor over a region), and by tapping while the cursor is directly over an object.

The view key 96 manages split views and is located left of the main ASCII keyboard.

To split an existing view, position the cursor near the center of an edge of the view, depress the view key 96, and use the GID 62 to reposition the new view divider to the desired location. To reposition a view divider, position the cursor on rather than near it, and use the view key 96 as before. To eliminate a view entirely, reduce its size to zero by repositioning an adjacent view divider.

The graphic tool keys are the touch and apply keys 78 and 98. They are located left of the main ASCII keyboard. To invoke a command from the menu in the pointing modality, depress the menu key 76, move the cursor over the command name, tap the touch key 78, and release the menu key 76. To operate a handle, position the cursor over it; then tap the touch key 78 or operate the GID 62 while depressing the touch key 78. To drag a selected object, position the cursor over it (away from all other handles); then operate the GID 62 while depressing the touch key 78. To pick up a graphic tool, tap the touch key 78 while the cursor is over the tool. To apply the current graphic tool, operate the GID 62 while depressing the apply key 98.

The help key 100 answers questions about the system parts and their interactions. It is located at the lower right corner of the keyboard.

To see an introductory help screen, depress the help key 100. To see a help screen about the GID 62 or any key on the keyboard, depress the help key 100; then operate the GID 62 or tap the desired key. To see a help screen about a menu command or category, operate the menu normally and depress the help key 100 while the command is highlighted or the category menu is displayed. To see a help screen about a handle, dialog, graphic tool, or other object, position the cursor over the desired thing. Then shift and depress the help key 100.

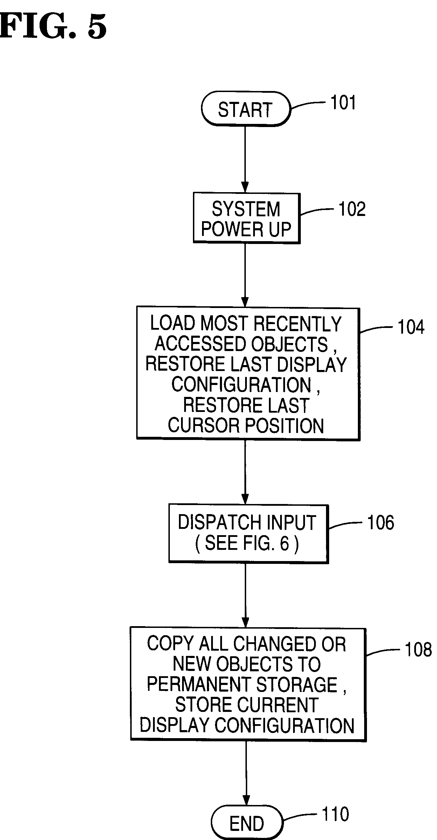

Referring now to Figs. 5-12, operation of the keyboard version of interface 20 is explained in more detail. With reference to Fig. 5, startup of computer system 10 begins with START 101.

In block 102, power is applied to computer system 10.

In block 104, interface 20 loads the most recently accessed objects, restores the last display, and restores the last cursor position.

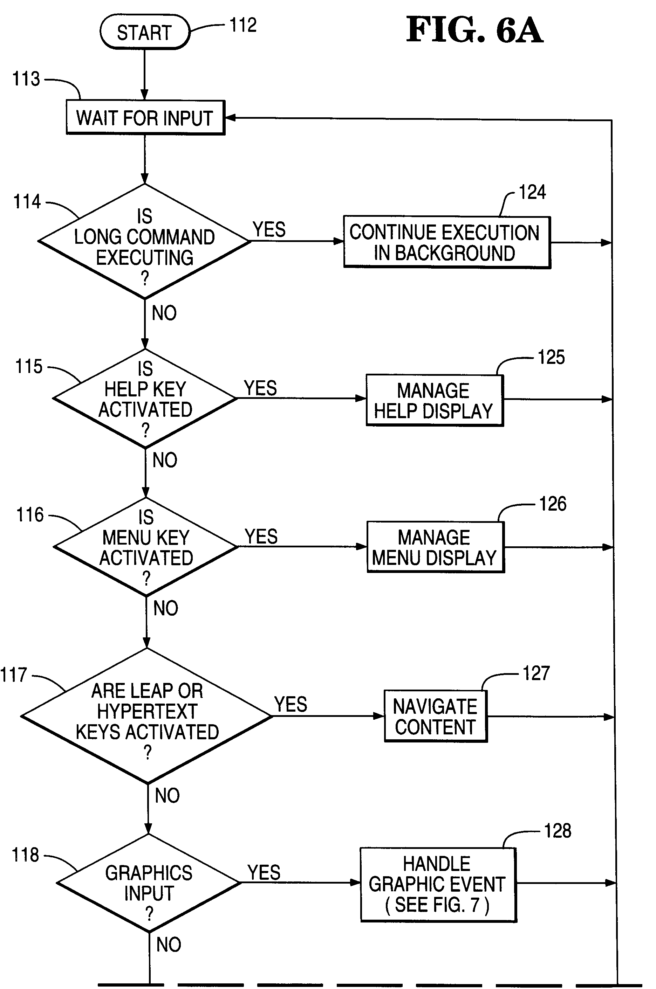

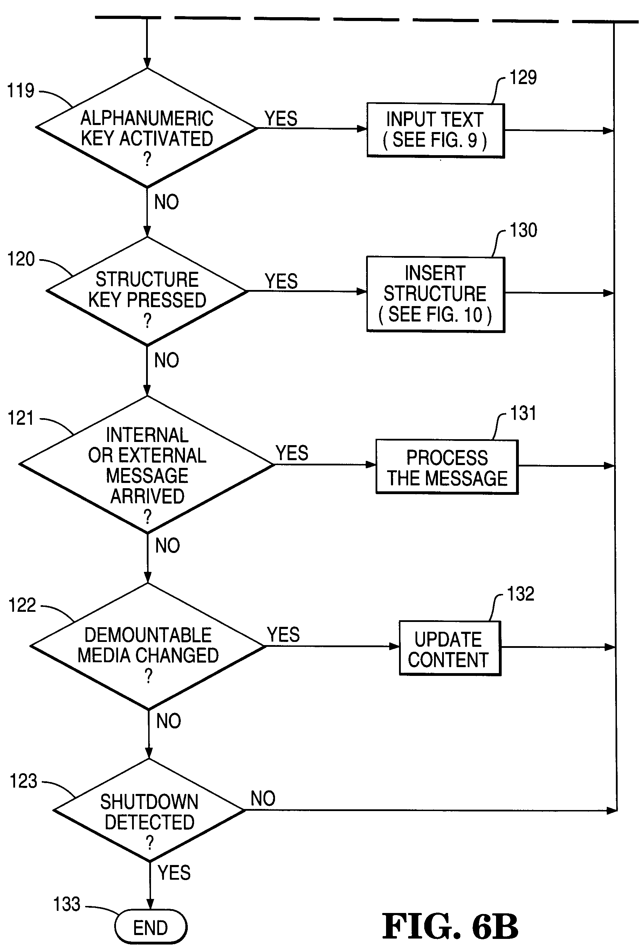

In block 106, interface 20 dispatches an input through input manager 40 (Fig. 6).

In block 108, interface 20 copies all changed or new objects to permanent storage and stores the current display configuration before power is removed at END 110.

With reference to Fig. 6, operation of input manager 40 is explained in more detail beginning with START 112.

In block 113, input manager 40 waits for an input.

In blocks 114-123, input manager 40 determines the type of input which has occurred. In the input is a long command executing, then execution of the long command continues in the background in block 124 before returning to block 113.

If the input is a help key input, then input manager manages the help display in block 125 before returning to block 113.

If the input is a menu key, then input manager 40 manages the menu display in block 126 before returning to block 113.

If the input is a leap or hypertext key, then input manager 40 navigates content in block 127 before returning to block 113.

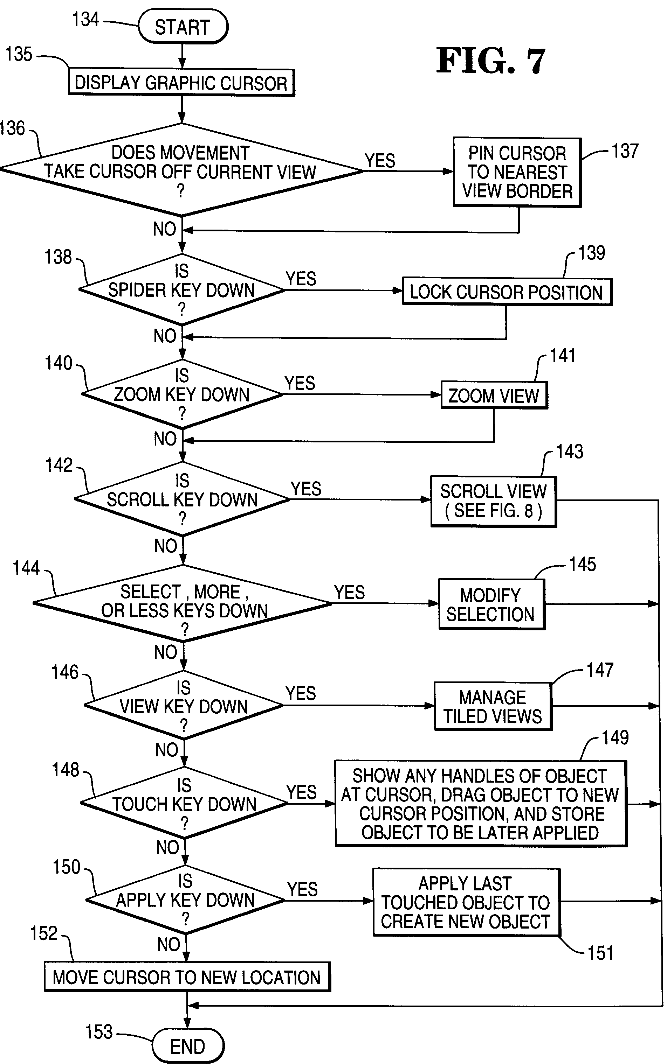

If the input is a graphic input, then input manager 40 handles the graphic input in accordance with the process of Fig. 7 in block 128 before returning to block 113.

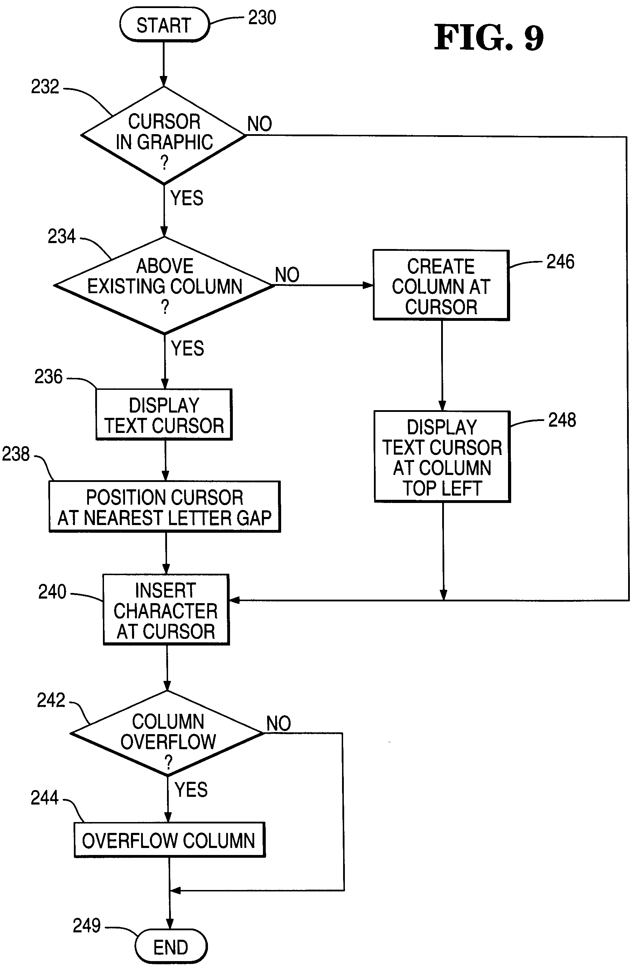

If the input is an alphanumeric key input, then input manager 40 handles the alphanumeric key input in accordance with the process of Fig. 9 in block 129 before returning to block 113.

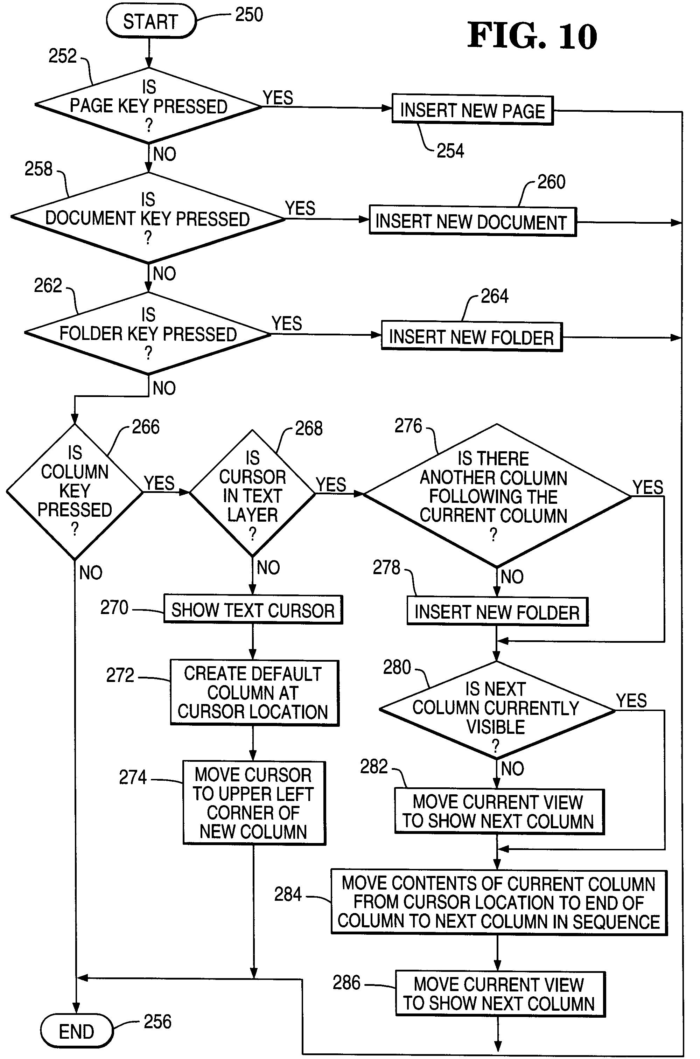

If the input is a structure input, then input manager 40 processes the insert structure input in accordance with the process of Fig. 10 in block 130 before returning to block 113.

If the input is an internal or external message, then input manager 40 processes the message in block 131 before returning to block 113.

If the input is a demountable media changed input, then input manager 40 handles the demountable media changed input in block 132 before returning to block 113 to wait for another input.

If the input is a shutdown input, then the procedure ends in block 133.

If the input is none of inputs 114-123, then the procedure returns to block 113.

With reference to Fig. 7, the process for handling a graphic input begins at START 134.

In block 135, input manager 40 displays the graphic cursor.

In block 136, input manager determines whether movement of the cursor has taken the cursor out of the current view. If so, then input manager 40 pins the cursor to the nearest view border in block 137 and proceeds to block 138. If not, then input manager 40 proceeds directly to block 138.

In block 138, input manager 40 determines whether the spider key is down. If so, then input manager 40 locks the cursor position in block 139 and proceeds to block 140. If not, then input manager 40 proceeds directly to block 140.

In block 140, input manager 40 determines whether the zoom key is down. If so, then input manager 40 zooms the view in block 141 and proceeds to block 142. If not, then input manager 40 proceeds directly to block 142

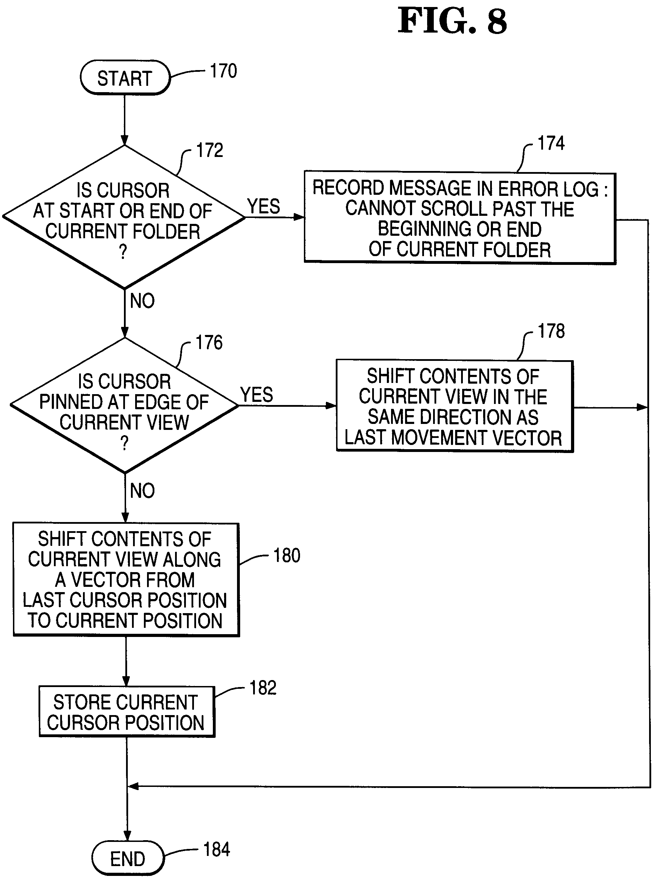

In block 142, input manager 40 determines whether the scroll key is down. If so, then input manager 40 scrolls the view in accordance with the procedure of Fig. 8 in block 143 and the method ends in block 153. If not, then input manager 40 proceeds directly to block 144.

In block 144, input manager 40 determines whether the select, more, or less keys are down. If so, then input manager 40 modifies the selection in block 145 and the method ends in block 153. If not, then input manager 40 proceeds directly to block 146.

In block 146, input manager 40 determines whether the view key is down. If so, then input manager 40 manages tiled views in block 147 and the method ends in block 153. If not, then input manager 40 proceeds directly to block 148.

In block 148, input manager 40 determines whether the touch key is down. If so, then input manager 40 shows any handles of the object at the cursor, drags the object to a new cursor position, and stores the object to be later applied before proceeding to the end 153. If not, then input manager 40 proceeds to block 150.

In block 150, input manager 40 determines whether the apply key is down. If so, then input manager 40 applies the last touched object to create a new object in block 151 and the method ends in block 153. If not, then input manager 40 proceeds to block 152.

In block 152, input manager 40 moves the cursor to the new location and the method ends in block 153.

With reference to Fig. 8, the process of scrolling begins at START 170.

In block 172, input manager 40 determines whether the cursor is at the start or end of the current folder. If so, then input manager 40 generates an error message in block 174 and proceeds to END 184. If not, then the process proceeds to block 174.

In block 176, input manager 40 determines whether the cursor is pinned at the edge of the current view.

If so, then input manager 40 shifts the contents of the current view in the same direction as the last movement vector in block 178 and proceeds to END 184. If not, then the process proceeds to block 180.

In block 180, input manager 40 shifts the contents of the current view along a vector from the last cursor position to the current cursor position.

In block 182, input manager 40 stores the current cursor position and the process ends at END 184.

Referring now to Fig. 9, the process for inserting text characters is explained in detail beginning with START 230.

In block 232, interface 20 determines whether the cursor is in graphic mode. If not, then a character is inserted in block 240.

If so, then interface 20 determines whether the cursor is above an existing column in block 234. If so, then interface 20 displays the text cursor in block 236 and a user positions the cursor at the nearest letter gap in block 238 before inserting the character at the cursor in block 240.

Returning to block 234, if the cursor is not above an existing column, the interface 20 creates a column at the cursor in block 246 and displays the text cursor at the top left of the column in block 248 before inserting the character at the cursor in block 240.

In blocks 242-244, interface 20 manages column overflow before proceeding to END 246.

Referring now to Fig. 10, the procedure for inserting structure is shown in detail, beginning with START 250.

In block 252, interface 20 determines whether page key 70 is pressed. If so, then interface 20 inserts a page in block 254 and the procedure ends at END 256.

If the page key 70 is not pressed, then interface 20 determines whether document key 72 is pressed in block 258. If so, then interface 20 inserts a new document in block 260 and the procedure ends at END 256.

If the document key 72 is not pressed, then interface 20 determines whether folder key 74 is pressed in block 262. If so, then interface 20 inserts a new folder in block 264 and the procedure ends at END 256.

If the folder key 74 is not pressed, then interface 20 determines whether the column key 68 is pressed in block 266. If not, the procedure ends at END 256. If the column key is pressed, then interface 20 determines whether the cursor is in the text layer in block 268. If not, then interface 20 shows the text cursor in block 270, creates a default column at the cursor location in block 272, and moves the cursor to the upper left corner of the new column in block 274, before proceeding to END 256.

Returning to block 268, if the cursor is in the text layer, then interface 20 determines whether there is another column following the current column in block 276. If not, then interface 20 inserts a new folder in block 278 before proceeding to block 280. If so, then the procedure branches directly to block 280.

In block 280, interface 20 determines whether the next column is currently visible. If not, then interface 20 moves the current view to show the next column before proceeding to block 284. If so, then the procedure branches directly to block 284.

In block 284, interface 20 moves the contents of the current column from the cursor location to the end of the column to the next column in sequence.

In block 286, interface 20 moves the current view to show the next column, before proceeding to END 256.

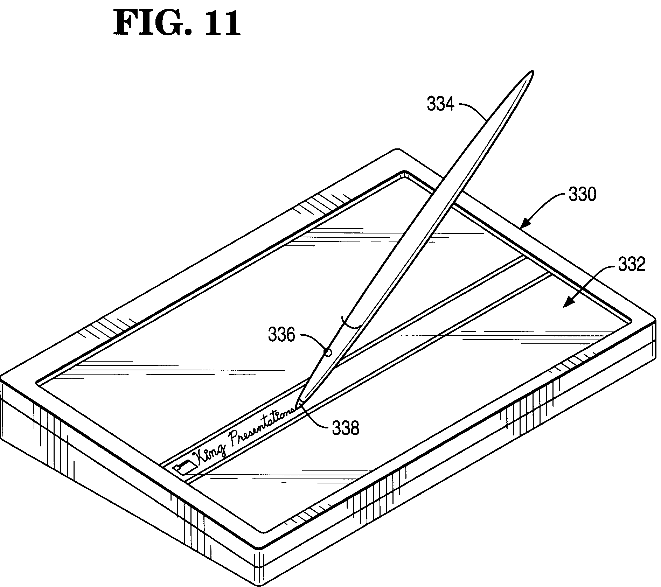

Referring now to Fig. 11, interface 20 works in a similar fashion when computer system 10 is a pen computer 330 and input device 14 includes a digitizer or touch screen 332 and pen 334. Pen 334 includes a barrel switch implemented by pushing button 336 and a tip switch implemented by pressing tip 338 of pen 334 against touch screen 332. To write and sketch, a user drags tip 338 across screen 332.

The screen has three panes 340-344 for displaying Prompts, Widgets, and Content. Prompts guide novices and remind experts with hints for what to do next. Widgets are indicators and controls which indicate conditions and operate tools.

Content is viewed directly. Interface 20 dispenses with abstractions of folder trees typified by Microsoft File Manager, Apple Finder, Norton Desktop, and other products. Instead, the content pane displays the current view of the current folder to provide a context within the folder tree.

Within the current folder, all pages are viewed directly without intervening abstractions. Pages are juxtaposed end-to-end with their left edges aligned into a folder galley, or continuous sequence of information. A document is nothing more than its constituent pages. In particular, its cover page identifies it better than any label.

Documents are separated by document tabs (rectangular strips upon which users may write and draw if desired).

Other folders within the current folder are represented by folder tabs (distinguished from divider tabs), which users are encouraged to label (much like ordinary, manila folders).

The folder tree is thus shaped by folder tabs within folders. Folder tabs represent folder subtrees, which can be viewed directly only by recursively entering their component folders.

A user may change the current view of the current folder by panning in any direction or zooming in and out. These functions facilitate viewing page boundaries and large pages. Other functions which facilitate scanning documents and folders include Paging by the height of the content pane, Riffling continuously at a variable rate, and Jumping to the closest document.

Changing the current view to another folder may be accomplished by Exiting the current folder to its parent folder, Entering a child folder of the current folder, Searching the system content for a string of text, Warping via links to distinguished objects, or Revisiting views via bookmarks or recent views.

A polymorphic cursor is employed in the second embodiment. The cursor may be a text cursor, a page cursor, or an edge cursor. The text cursor lies between glyphs (within text). The page cursor lies upon pages (not within text). The edge cursor lies between pages and tabs of folder galleys. The cursor is always visible and is positioned by dragging with the Touch tool described below.

The basic commands in the second embodiment are the delete, move, copy, and new commands. The delete, move, and copy commands are common functions for managing existing information. The new command instantiates predefined objects. Specialized commands may be found by executing the menu tool below.

As in the first embodiment, the pseudomode is central to the pen computing version of interface 20. All operations are available at any time. Button 336 and tip 338 are employed to implement many of the functions of interface 20 by opening or closing the momentary-contact switches associated with button 336 and tip 338 and performing operations whose semantics are modified by the switches. Tip 338 is employed to apply psuedomodes, while button 336 is employed to grasp (choose) tools.

Interface states are shown in the table below:

| from...to | wait | relax | ink | grasp | apply |
|---|---|---|---|---|---|
| wait | | | ⇓tip | ⇓tool | |
| relax | see below | | ⇓tip | ⇓tool | |
| ink | | ⇑tip | | | ⇓tool |
| grasp | | ⇑tool | | | ⇓tip |
| apply | | | ⇑tool | ⇑tip | |

The wait state is a "not in use" state.

The relax state is a "ready for use" state in which tip 338 and tools are ready for use (⇑tip, ⇑tool).

The ink state is a "pen tracing" state in which tip 338 is contacting the surface, but a tool is not being used ( ⇓ tip, ⇑tool).

The grasp state is a "holding a tool" state in which a tool is ready for use (⇑tip, ⇓ tool).

The apply state is a "tool in use" state in which tip 338 is contacting the surface and a tool is being used ( ⇓ tip, ⇓ tool).

For example, the basic pseudomodes (tools) include the menu, explain, drawing, search, select, touch, navigate, warp, revisit, and undo tools, whose purposes are listed below:

Menu        execute commands and grasp other tools.
Explain     demystify parts of the system.
Drawing     instantiate freeform objects.
Search      find commands, tools, and strings of text.
Select      designate objects for subsequent commands.
Touch       press and drag objects.
Navigate    change the current view of system content.
Warp        find and traverse connections among objects.
Revisit     revisit sites of recent activity.
Undo        recover from mistakes.
Telephone   dial a name or telephone number.

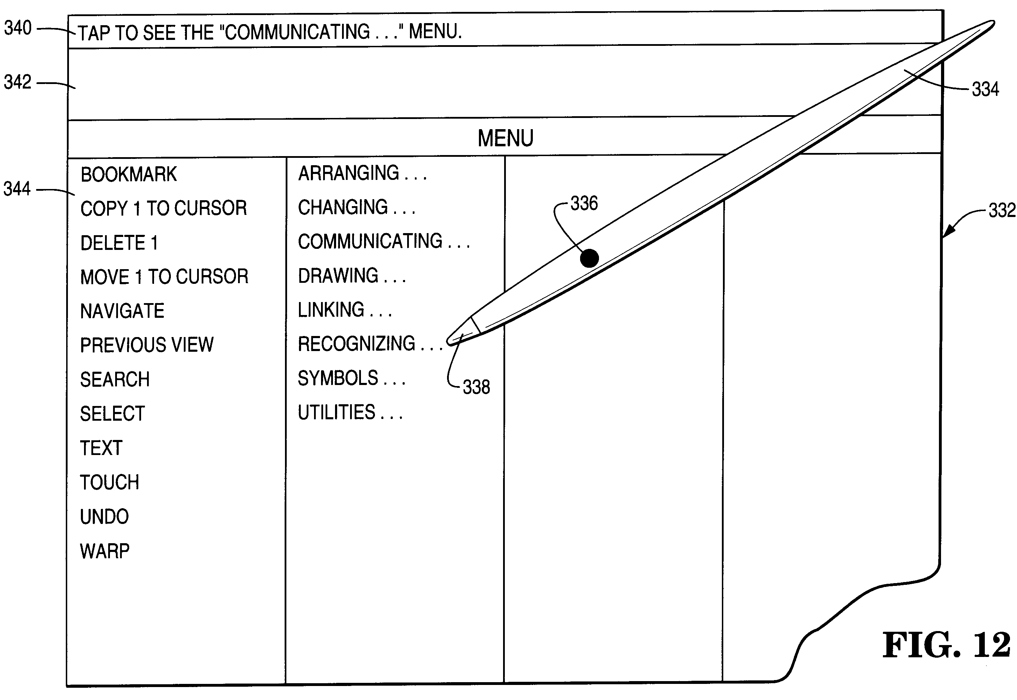

As shown in Fig. 12, menus are activated using button 336, which makes them more like "popup" than "pulldown" menus. Also, the first menu can present more choices than a simple, horizontal list (as in the case of pulldowns).

The menu tool is used to execute commands and grasp other tools. In the relax state, a user must depress and hold button 336. The top menu of the menu tree fills the content pane. A menu tree is rooted at the top menu which holds all operations.

Each menu has a label and nodes where a node is a category or a terminal. A category is a menu subtree, while a terminal is a command or a tool. Commands apply actions to selected objects which are executed from the menu without further intervention and which can be placed in the background by depressing either of the two switches. Tools manipulate objects and system states with the pen and are grasped from the menu for subsequent application.

In other words, the Menu tool is grasped by default.

To see a category menu, a user must tap the category name such that tip 338 contacts the surface momentarily. The category menu page is displayed. A recursive display of categories descends the menu tree. To restore the parent menu page, a user must tap the "return" widget within the menu tool.

To execute a command, a user must tap the command name in the menu. The command is then highlighted. To undo the selection, a user must tap a white space or another node. To execute the command, a user must enter the relax state by releasing button 336, which restores the content page.

To grasp a tool, a user must tap the tool name to restore the content page and enter the tool's grasp state.

To exit the Menu tool, a user must enter the relax state.

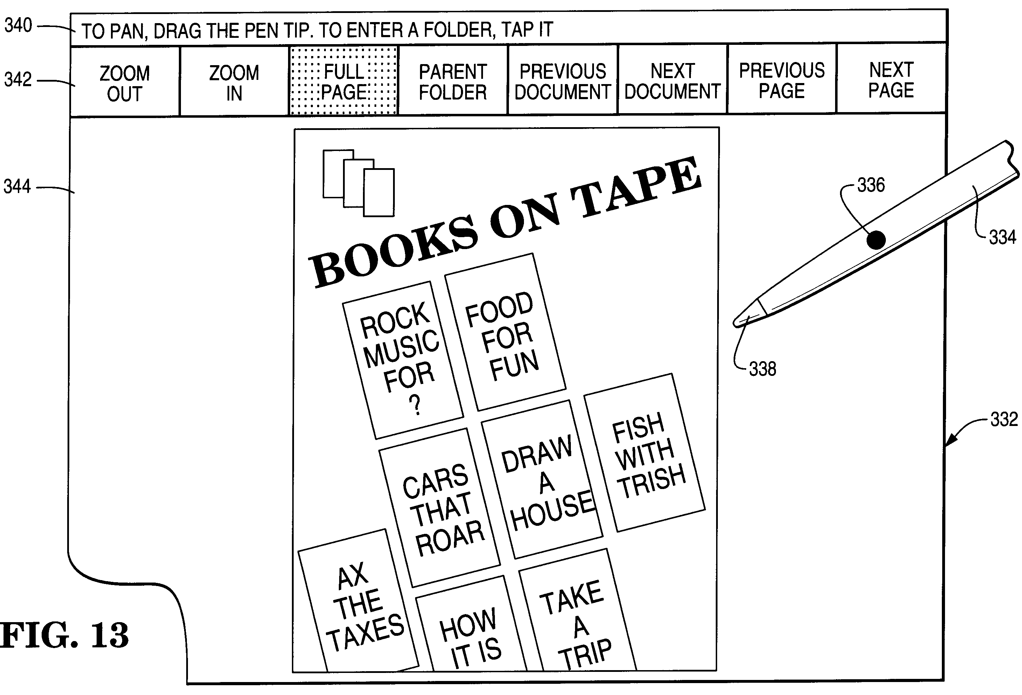

Turning now to Fig. 13, the Navigate Tool is used to implement Page, Jump, Enter, and Exit operations. To page by the height of the content pane, a user must tap "Previous Page" or "Next Page" to scroll one increment, backward or forward. The user must press "Previous Page" or "Next Page" to riffle continuously, backward or forward. "Previous Page" and "Next Page" mutate into a page valuator, whose displacement from center controls paging rate. A scroll increment is one page while "Full Page" is highlighted.

A user must tap "Previous Document" or "Next Document" to jump to the closest document tab, backward or forward. The user must press "Previous Document" or "Next Document" to jump continuously, backward or forward. "Previous Document" and "Next Document" mutate into a jump valuator, whose displacement from center controls jumping rate.

To enter a child folder of the current folder, a user must tap the folder tab to be entered. The reentry view of the child folder is displayed.

To exit the current folder to its parent folder, a user must tap "Parent Folder". The current view is cached for reentry. The previous view of the parent folder is displayed. To reach the root folder tap "Parent Folder" multiple times, or press "Parent Folder" to riffle through parent folders. To terminate recursion, the root folder cannot be exited.

To exit the Navigate tool, a user must enter the relax state.

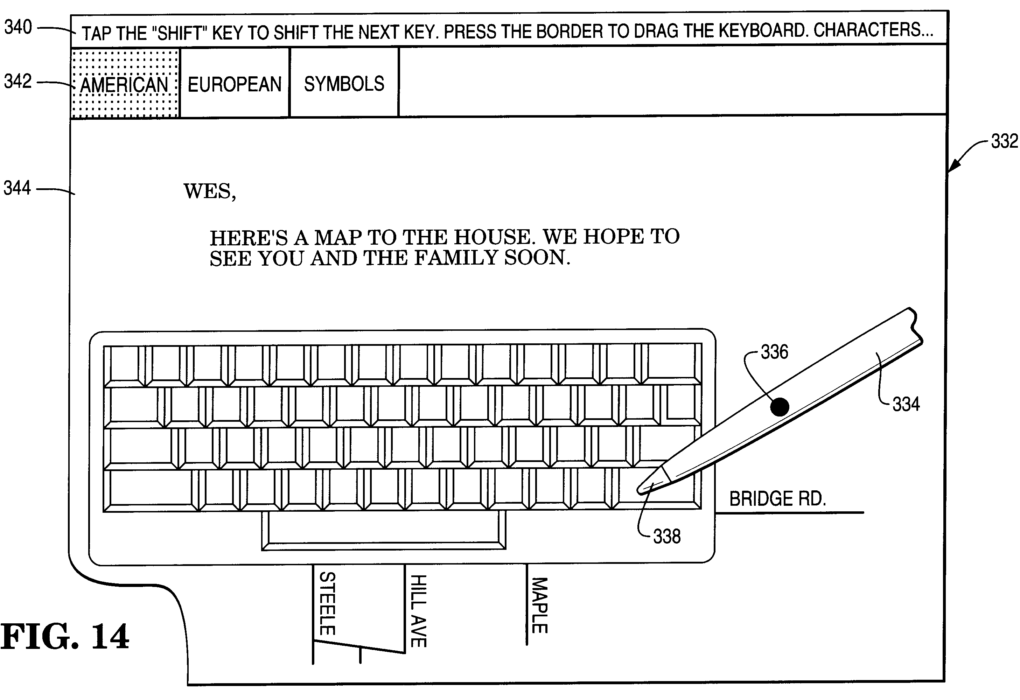

Turning now to Fig. 14, an example of an embedded object, the keyboard tool is illustrated. The Keyboard Tool is used to enter standard symbols from a "pencentric keyboard". Unlike other pen-based virtual keyboards, the Keyboard Tool is a psuedomode. A user must grasp "Keyboard" from the menu. The keyboard overlays part of the content pane. Symbols entered from the keyboard are inserted at the cursor.

To enter an unshifted symbol, a user must tap the key whose lower label is the symbol.

To enter a shifted symbol, a user must tap the representation of the SHIFT key, which highlights. Tapping the UNSHIFT key undoes the selection. The user then taps the key whose upper label is the symbol. The SHIFT key unhighlights.

To reposition the keyboard, a user must press the border of the keyboard and drag it.

To exit the Keyboard tool, a user must enter the relax state. The keyboard disappears.

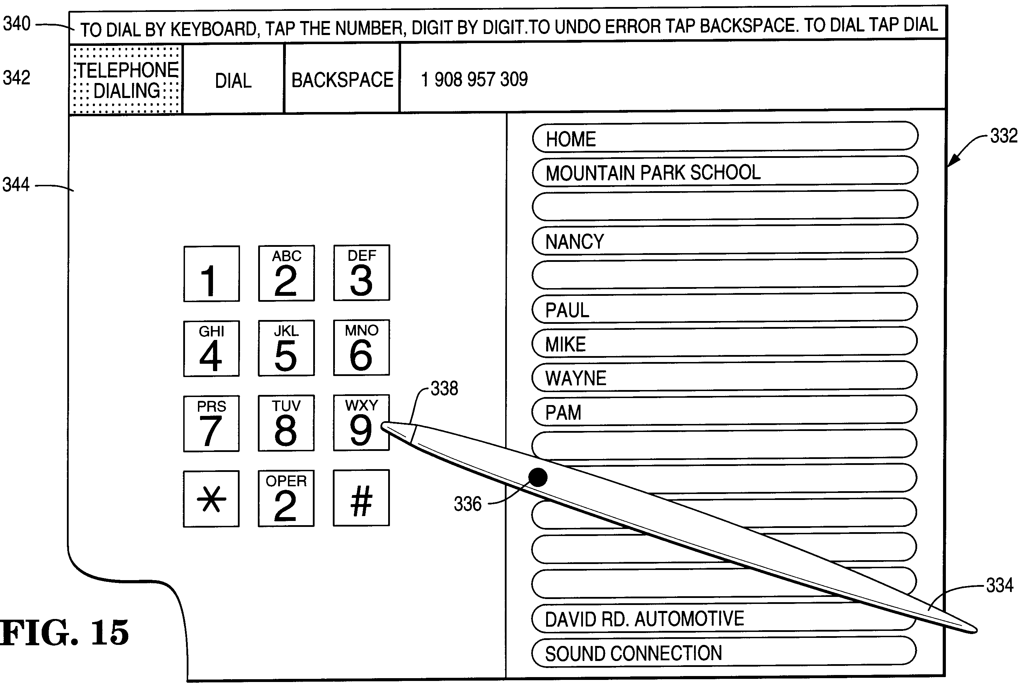

Turning now to Fig. 15, another example of an embedded object, the telephone tool is illustrated. The Telephone Tool is used to answer an incoming call, to initiate an outgoing call manually through a keypad, and to initiate an outgoing call by writing.

To manually answer the phone, a user must grasp "Telephone" from the menu. The content pane is not affected. The user must tap "Answer" to effect "Ring Here..Connect".

To answer an incoming call automatically, the Settings folder switches must be set for directing incoming calls to the "answering machine", instead of to the "telephone". An associated audio object holds the greeting. Incoming calls are recorded as audio objects and appended to the Inbox.

To indicate the identity of an incoming call (Caller ID), a Telephone Status indicator displays the Caller ID during the Ring Here state.

To initiate an outgoing call by selection, a user must use the Select tool to designate a number or name. Such a name must appear in the Names folder with a number. In the Free state, a user must invoke the Dial 1 command from the menu to effect Free...Dial.

To initiate an outgoing call by keypad, a user must grasp Telephone from the menu to effect Free...Dial. The content pane is overlaid with a keypad and "speed dialing" buttons. The Dial Buffer holds digits entered from the keypad. The user then taps the keypad buttons to enter the number. To remove the last buffer character, the user must tap Backspace.

A user must enter the relax state to effect Dial...Free. The user taps Dial to effect "Dial...Busy There" or "Dial...Ring There". The content pane is restored.

To initiate an outgoing call by buttons, a user must, grasp "Telephone" from the menu to effect "Free...Dial". The content pane is overlaid with a keypad and "speed dialing" buttons. The user taps a "speed dialing" button (containing a number or name).

A user must enter the relax state to effect "Dial...Free". The user taps "Dial" to effect "Dial...Busy There" or "Dial...Ring There". The content pane is restored.

To initiate an outgoing call by writing, a user must, grasp "Telephone" from the menu to effect "Free...Dial". The content pane is overlaid with a keypad and "speed dialing" buttons. The Dial Buffer holds ink and recognized text. The user must ink a number or name in the Dial Buffer. Such a name must appear in the Names folder with a number. The user can tap Backspace to remove the last buffer character.

The user must enter the relax state to effect Dial...Free. The user taps Dial to effect Dial...Busy There or Dial...Ring There. The content pane is restored.

To edit the "speed dialing" buttons, a user must access the Settings folder containing the page displayed by the Telephone tool. Once there, the user uses standard commands and tools to edit the strings within the "speed dialing" buttons. Since the buttons are activated by the Telephone tool, there is no confusion between editing and using the buttons.

To hang up at any time, a user must grasp Telephone from the menu. The content pane is not affected. The user taps "Hang Up" to effect "Busy There...Free...Dial", "Ring There...Free...Dial", or "Connect...Free...Dial". The content pane is overlaid with a keypad and "speed dialing" buttons.

To initiate collaboration, either user must select one or more sequences of contiguous pages, documents, and folders. That user then invokes the Share 1 command, which transmits the selection (simple or compound) to the other user's Inbox. If the first user wishes to protect the shared contents, then a local copy should be made first. Either user may repeat this operation at any time during the conversation. Previous shared contents are still shared (until either user hangs up).

To point at shared content, either user (or both) grasps the Remote Cursor tool from the menu. While this tool is applied at the transmitting end to shared content, its current position is visible at the receiving end if that corresponding position lies within the current view. This flexibility permits collaborators to view other portions of their own system content at will.

To edit shared content, either user (or both) invokes standard operations upon shared content. Any changes to that shared content are automatically reflected in the shared content of the other user.

To terminate collaboration, either user hangs up.

To exit the Telephone tool, a user must enter the relax state.

The following tools use the same three areas 340-344 of screen 323 and are just as intuitive. Therefore, additional figures are not deemed necessary.

The explain tool is used to demystify parts of the system. A user must grasp "Explain" from the menu and press an object with tip 338. Menu categories, commands, and tools can be explained by applying the Explain tool to objects within the Menu folder. The object's explanation page is then displayed. The user must then lift the pen to restore the tool and content page.

The explain tool may be used to explain recent events, including invocations and terminations of commands and tools, communication activities, errors, etc. A user must grasp "Explain" from the menu and press the "Previous Event" widget. The user must then lift the pen to restore the tool and content page.

A user exits the explain tool by entering the relax state.

The drawing tools are used to draw and attribute free-form objects. A freeform object is authored with a drawing tool that is grasped by touching an instance already drawn with that tool. Such objects can exist anywhere in the system content. Hence, any set of freeform objects is a menu of drawing tools, and it is simple to construct sets of such tools with tailored combinations of nibs, colors, and other attributes.

For convenience, the "Drawing" menu initially contains instances of each drawing tool shipped with the system. Since menus are pages of system content, the contents of the "Drawing" menu itself can be customized.

Obvious drawing tools include freehand curves, straight lines and polygons, rectangles and squares, circles and ellipses, and text (recognized on-the-fly from freehand scribbles). More elaborate tools, such as airbrushes, are easily imagined.

Attributing may be established before or after the act of authoring. For attributes that are changed after authoring, attribute tools are applied to the current selection. Examples include geometric tools for changing origin, size, orientation, and vertex properties; nib tools for changing line width, dash pattern, and cap and join style; color tools for changing colors; and text tools for changing font, face, height, indent, margins, tabs, alignment, etc.

Handwriting is implicitly recognized by three tools (Text, Search, and Telephone). The Text tool is grasped either from the "Drawing" menu or by applying the Touch tool to existing text. The Search and Telephone tools are grasped only from the menu. Although illustrations of these tools show handwriting only within the widget pane, it could probably be authored within the content pane as well (as long as its orientation is recognizable).

The Search tool is used to scan the system content for a string of text. The is activated by pressing and holding button 336. The top menu of the menu tree fills the content pane.

To grasp a search tool, a user must continue to hold the tool button, and tap "Search", which appears on the top menu. The menu disappears, system content is restored, and the widget pane displays Reverse, Forward, Backspace, and the pattern buffer (a place, initially empty, to enter the search pattern). Forward is initially highlighted, indicating the default search direction.

To enter a search pattern, a user must continue to hold the tool button and, using whatever style of handwriting is recognizable by the system, enter one or more characters of the search pattern. The search begins at the original cursor position. As each character is recognized, the cursor moves immediately left of the text that is nearest the original cursor position and that matches the search pattern. "Nearest" is defined in terms of depth-first traversal of the folder tree. If there is no match, then the cursor does not move. Lower case patterns match lower and upper case content but upper case patterns match only upper case content. The current view of the current folder changes (if necessary) to display the cursor and matching text.

To repeat the search and/or change the search direction, a user must continue to hold the tool button and tap either Forward or Reverse, depending upon the desired search direction. The search continues, not from the original, but rather from the current cursor position. Forward or Reverse is highlighted, indicating the current search direction.

To edit the search pattern, a user must continue to hold the tool button and tap Backspace to remove the last character of the search pattern. The cursor moves accordingly. We may add an additional widget (Previous Pattern) to preload the buffer with the pattern that was in effect when the Search tool was last exited.

To exit the Search tool, a user must release button 336.

The Select tool designates objects for subsequent commands. A user must grasp "Select" from the menu. Once selected, objects may be added or removed.

To create a new selection, a user must tap Select if it is not already highlighted. Then the user taps the pen on an object to select it. To select multiple objects, the user drags the pen.

To add to a current selection, a user must tap Add if it is not already highlighted and apply the tool as above.

To remove from a current selection, a user must tap Remove if it is not already highlighted and apply the tool as above.

To extend a previous addition or removal sequentially, a user must tap another widget (Add Sequence or Remove Sequence), which appears if the previous Select, Add, or Remove was applied within a sequence of characters, pages, etc., if it is not already highlighted. The user then applies the tool as above within the same sequence in which the previous Select, Add, or Remove was applied, thus enabling long selections without tedious scrolling.

To exit the Select tool, a user must enter the relax state.

The Touch Tool is use to press and drag objects (including the cursor). A user must grasp "Touch" from the menu and apply the tool directly to an object. Only selected objects (and the cursor) can be dragged.

The polymorphic cursor changes shape as it is dragged within text while Among is highlighted (text shape), within the page while Above or Below is highlighted (page shape), or between pages and tabs (edge shape).

To grasp a tool directly from the system content, a user must tap an object. The Touch tool is transformed into a tool that will author similar objects.

To exit the Touch tool, a user must enter the relax state.

The Warp Tool employs hypertextual operations to find and traverse connections among objects. A user must grasp the Warp tool from the menu. All near ends (linked objects) highlight.

To warp to the far end of a link, a user must tap a near end (linked object). The first far end linked to the near end is displayed. The current folder and view change as necessary. In this far state, only the far end highlights.

To return to the near end, a user must tap the far end. In this near state (again), all near ends highlight.

To warp to other far ends linked to the same near end, a user must tap Previous Link or Next Link. The previous or next far end is displayed. The current folder and view change as necessary. In this far state (still), only the previous or next far end highlights.

To exit the Warp tool, a user enters the relax state.

Bookmarks remember views that have some static importance to a user. They are managed with a pair of tools that display several of them (perhaps 3-by-3 or 4-by-4) in the content pane. The visual representation of a bookmark is the shrunken image of its associated view. The user is cued not only by the small image but also by its spatial position within the pane.

To replace an existing bookmark with a new one for the current view, a user must grasp "New Bookmark" from the menu and tap the existing bookmark.

To use an existing bookmark to restore its view, a user must grasp "Bookmark" from the menu and tap an existing bookmark. When a folder is deleted, its associated bookmarks are automatically deleted.

To revisit sites of recent activity, a user must grasp "Previous View" from the menu. The previous view is restored. The user must tap Previous View or Next View for other views.

To exit the revisiting tool, a user must enter the relax state.

The Undo Tool allows a user to recover from mistakes. The user must grasp "Undo" from the menu. The previous system state is restored. The user must tap Undo or Redo for other system states. Since limitless undoing requires infinite memory, undo history is truncated at some reasonable limit.

To exit the Undo tool, a user must enter the relax state.

## Claims

1. A computer system characterized by a processor which executes a single program which includes the functionality of an operating system and a plurality of separate application programs and which includes a graphic user interface; a display device coupled to the processor which displays the graphic user interface; and a user input means coupled to the processor for entering user input into the program.

2. A computer system according to claim 1, characterized in that the graphic user interface comprises interface data objects instead of the separate application programs.

3. A computer system according to claim 2, characterized in that the graphic user interface comprises: a plurality of subsystems including: a content structuring sub-system which organizes data in ways that make sense to the user; a search and navigation subsystem a graphic manipulation subsystem; which provides graphic functions to graphically manipulate displayed objects; a text entry subsystem which allows a user to enter and edit text; a command subsystem which allows the user to perform functions on selected objects; and an input manager which provides pathways that connect the user input means and the display to user tasks and which controls operation of the subsystems.

4. A computer system according to any one of the preceding claims, characterized by a permanent storage medium coupled to the processor; and a temporary storage medium coupled to the processor; wherein the permanent and temporary storage media represent a single storage medium to a user.

5. A computer system according to any one of the preceding claims, characterized in that the user input means incorporates a keyboard.

6. A computer system according to claim 5, characterized in that the keyboard comprises content structuring keys.

7. A computer system according to claim 5 or claim 6, characterized in that the keyboard comprises: a graphic input device; and a leap key; wherein the graphic input device and the leap key provide a single displayed text marker.

8. A computer system according to any one of claims 5 to 7, characterized in that the keyboard comprises a spider key which causes a graphics cursor to be displayed.

9. A computer system according to any one of claims 5 to 8, characterized in that the keyboard comprises selection keys including: a select key for creating a current selection; a more key for adding objects to the current selection; and a less key for removing objects from the current selection.

10. A computer system according to any one of claims 1 to 4, characterized in that the user input means incorporates a digitizer coupled to the processor, and a stylus.

11. A computer system according to claim 10, characterized in that the display device comprises a plurality of distinct areas established by the program for displaying information associated with each area.

12. A computer system according to claim 10 or claim 11, characterized in that the stylus comprises a tip switch at the writing end and a barrel switch for implementing a predetermined function.

13. A method of controlling a computer system characterized by the steps of: executing a single program in a processor which has the functionality of an operating system and a plurality of separate application programs and which includes a graphic user interface; displaying the graphic user interface on a display coupled to the processor; and entering user input into the processor, including the substeps of contacting a stylus against the surface of a digitizer coupled to the processor.

# FIG. 1

DISPLAY 18

20 INTERFACE

12 CPU

14 INPUT DEVICE

PRIMARY STORAGE DEVICE — 22

SECONDARY STORAGE DEVICE — 24

MEMORY — 16

# FIG. 2

ABSTRACT MEMORY 16

FOLDER

FOLDERS — 32

OBJECTS

30 — DOCUMENT DIVIDERS

34

PAGE 36

PAGE 36

FOLDERS

OBJECTS

DOCUMENT DIVIDERS

# FIG. 3

PROCESS MANAGER — 54

SEARCH AND NAVIGATION SUB – SYSTEM — 52

CONTENT STRUCTURING SUB – SYSTEM — 42

EXPLANATION AND TUTORING SUB – SYSTEM — 50

INPUT MANAGER — 40

GRAPHIC MANIPULATION SUB – SYSTEM — 44

COMMAND SUB – SYSTEM — 48

COMMUNICATION MANAGER — 56

MEDIA MANAGER — 58

TEXT ENTRY SUB – SYSTEM — 46

# FIG. 4

TRACKBALL 62

SPIDER KEY 64

# FIG. 5

START —— 101

↓

SYSTEM POWER UP —— 102

↓

LOAD MOST RECENTLY ACCESSED OBJECTS , RESTORE LAST DISPLAY CONFIGURATION , RESTORE LAST CURSOR POSITION —— 104

↓

DISPATCH INPUT ( SEE FIG. 6 ) —— 106

↓

COPY ALL CHANGED OR NEW OBJECTS TO PERMANENT STORAGE , STORE CURRENT DISPLAY CONFIGURATION —— 108

↓

END —— 110

**FIG. 6A**

START — 112

113 — WAIT FOR INPUT

114 — IS LONG COMMAND EXECUTING ? → YES → CONTINUE EXECUTION IN BACKGROUND — 124

NO

115 — IS HELP KEY ACTIVATED ? → YES → MANAGE HELP DISPLAY — 125

NO

116 — IS MENU KEY ACTIVATED ? → YES → MANAGE MENU DISPLAY — 126

NO

117 — ARE LEAP OR HYPERTEXT KEYS ACTIVATED ? → YES → NAVIGATE CONTENT — 127

NO

118 — GRAPHICS INPUT ? → YES → HANDLE GRAPHIC EVENT ( SEE FIG. 7 ) — 128

NO

19

119 — ALPHANUMERIC KEY ACTIVATED ? — YES → INPUT TEXT ( SEE FIG. 9 ) 129

NO ↓

120 — STRUCTURE KEY PRESSED ? — YES → INSERT STRUCTURE ( SEE FIG. 10 ) 130

NO ↓

121 — INTERNAL OR EXTERNAL MESSAGE ARRIVED ? — YES → PROCESS THE MESSAGE 131

NO ↓

122 — DEMOUNTABLE MEDIA CHANGED ? — YES → UPDATE CONTENT 132

NO ↓

123 — SHUTDOWN DETECTED ? — NO →

YES ↓

133 — END

**FIG. 6B**

**FIG. 7**

START

DISPLAY GRAPHIC CURSOR

DOES MOVEMENT TAKE CURSOR OFF CURRENT VIEW ?

YES → PIN CURSOR TO NEAREST VIEW BORDER

NO

IS SPIDER KEY DOWN ?

YES → LOCK CURSOR POSITION

NO

IS ZOOM KEY DOWN ?

YES → ZOOM VIEW

NO

IS SCROLL KEY DOWN ?

YES → SCROLL VIEW ( SEE FIG. 8 )

NO

SELECT , MORE , OR LESS KEYS DOWN ?

YES → MODIFY SELECTION

NO

IS VIEW KEY DOWN ?

YES → MANAGE TILED VIEWS

NO

IS TOUCH KEY DOWN ?

YES → SHOW ANY HANDLES OF OBJECT AT CURSOR, DRAG OBJECT TO NEW CURSOR POSITION, AND STORE OBJECT TO BE LATER APPLIED

NO

IS APPLY KEY DOWN ?

YES → APPLY LAST TOUCHED OBJECT TO CREATE NEW OBJECT

NO

MOVE CURSOR TO NEW LOCATION

END

# FIG. 8

START — 170

IS CURSOR AT START OR END OF CURRENT FOLDER ? — 172

YES →

RECORD MESSAGE IN ERROR LOG : CANNOT SCROLL PAST THE BEGINNING OR END OF CURRENT FOLDER — 174

NO

IS CURSOR PINNED AT EDGE OF CURRENT VIEW ? — 176

YES →

SHIFT CONTENTS OF CURRENT VIEW IN THE SAME DIRECTION AS LAST MOVEMENT VECTOR — 178

NO

SHIFT CONTENTS OF CURRENT VIEW ALONG A VECTOR FROM LAST CURSOR POSITION TO CURRENT POSITION — 180

STORE CURRENT CURSOR POSITION — 182

END — 184

# FIG. 9

```
                    ( START )——230
                        |
                        v
232——     < CURSOR
           IN GRAPHIC >——NO————————————————————————+
              ?                                     |
              |                                     |
             YES                                    |
              |                                     |
              v                                     |
234——     < ABOVE                    +———————————+  |
        EXISTING COLUMN >——NO———————>| CREATE    |——246
              ?                       | COLUMN AT |  |
              |                       | CURSOR    |  |
             YES                      +———————————+  |
              |                             |        |
              v                             v        |
236——  +———————————+              +———————————+      |
       | DISPLAY   |              | DISPLAY   |——248  |
       | TEXT      |              | TEXT CURSOR|      |
       | CURSOR    |              | AT COLUMN |       |
       +———————————+              | TOP LEFT  |       |
              |                   +———————————+       |
              v                         |             |
238——  +———————————————————+            |             |
       | POSITION CURSOR   |            |             |
       | AT NEAREST LETTER |            |             |
       | GAP               |            |             |
       +———————————————————+            |             |
              |                         |             |
              v                         v             |
240——  +———————————+<————————————————————<———————————+
       | INSERT    |
       | CHARACTER |
       | AT CURSOR |
       +———————————+
              |
              v
242——     < COLUMN
          OVERFLOW >——NO———————+
             ?                  |
             |                  |
            YES                 |
             |                  |
             v                  |
244——  +———————————————+        |
       | OVERFLOW      |        |
       | COLUMN        |        |
       +———————————————+        |
             |                  |
             v<—————————————————+
             |
             v
249——     ( END )
```

# FIG. 10

START — 250

252 — IS PAGE KEY PRESSED ? — YES → INSERT NEW PAGE — 254

NO

258 — IS DOCUMENT KEY PRESSED ? — YES → INSERT NEW DOCUMENT — 260

NO

262 — IS FOLDER KEY PRESSED ? — YES → INSERT NEW FOLDER — 264

NO

266 — IS COLUMN KEY PRESSED ? — YES → 268 — IS CURSOR IN TEXT LAYER ? — YES → 276 — IS THERE ANOTHER COLUMN FOLLOWING THE CURRENT COLUMN ? — YES

NO (266)

NO (268) → 270 — SHOW TEXT CURSOR

278 — INSERT NEW FOLDER (NO from 276)

272 — CREATE DEFAULT COLUMN AT CURSOR LOCATION

280 — IS NEXT COLUMN CURRENTLY VISIBLE ? — YES

274 — MOVE CURSOR TO UPPER LEFT CORNER OF NEW COLUMN

NO (280)

282 — MOVE CURRENT VIEW TO SHOW NEXT COLUMN

284 — MOVE CONTENTS OF CURRENT COLUMN FROM CURSOR LOCATION TO END OF COLUMN TO NEXT COLUMN IN SEQUENCE

286 — MOVE CURRENT VIEW TO SHOW NEXT COLUMN

END — 256

24

# FIG. 11

**FIG. 12**

340 — TAP TO SEE THE "COMMUNICATING . . ." MENU.

342 —

334

MENU

344 —

| BOOKMARK | ARRANGING . . . |
| COPY 1 TO CURSOR | CHANGING . . . |
| DELETE 1 | COMMUNICATING . . . |
| MOVE 1 TO CURSOR | DRAWING . . . |
| NAVIGATE | LINKING . . . |
| PREVIOUS VIEW | RECOGNIZING . . . |
| SEARCH | SYMBOLS . . . |
| SELECT | UTILITIES . . . |
| TEXT | |
| TOUCH | |
| UNDO | |
| WARP | |

336

338

332

EP 0 636 974 A2

| ZOOM OUT | ZOOM IN | FULL PAGE | PARENT FOLDER | PREVIOUS DOCUMENT | NEXT DOCUMENT | PREVIOUS PAGE | NEXT PAGE |
|---|---|---|---|---|---|---|---|

342 —

344 —

## BOOKS ON TAPE

ROCK MUSIC FOR ?

FOOD FOR FUN

CARS THAT ROAR

DRAW A HOUSE

FISH WITH TRISH

AX THE TAXES

HOW IT IS

TAKE A TRIP

336

334

338

332

**FIG. 13**

EP 0 636 974 A2

EP 0 636 974 A2

340 — TAP THE "SHIFT" KEY TO SHIFT THE NEXT KEY. PRESS THE BORDER TO DRAG THE KEYBOARD. CHARACTERS...

342 — AMERICAN | EUROPEAN | SYMBOLS

332

344 —

WES,

HERE'S A MAP TO THE HOUSE. WE HOPE TO
SEE YOU AND THE FAMILY SOON.

336

334

BRIDGE RD.

338

STEELE  HILL AVE  MAPLE

**FIG. 14**

EP 0 636 974 A2

**FIG. 15**

340 — TO DIAL BY KEYBOARD, TAP THE NUMBER, DIGIT BY DIGIT. TO UNDO ERROR TAP BACKSPACE. TO DIAL TAP DIAL

342

| :TELEPHONE: :::DIALING::: | DIAL | BACKSPACE | 1 908 957 309 |
|---|---|---|---|

332

344

HOME

MOUNTAIN PARK SCHOOL

NANCY

PAUL

MIKE

WAYNE

PAM

| 1 | ABC 2 | DEF 3 |
|---|---|---|
| GHI 4 | JKL 5 | MNO 6 |
| PRS 7 | TUV 8 | WXY 9 |
| * | OPER 2 | # |

338

336

334

DAVID RD. AUTOMOTIVE

SOUND CONNECTION